Europäisches Patentamt

(19) European Patent Office

Office européen des brevets

(11) Numéro de publication: **0 041 443**
**B1**

(12) **FASCICULE DE BREVET EUROPEEN**

(51) Int. Cl.³: **A 01 D 85/00**, A 01 F 15/14

(45) Date de publication du fascicule du brevet:
**09.05.84**

(21) Numéro de dépôt: **81400841.3**

(22) Date de dépôt: **26.05.81**

(54) **Dispositif de liage pour presses à balles cylindriques.**

(30) Priorité: **29.05.80 FR 8011921**

(43) Date de publication de la demande:
**09.12.81 Bulletin 81/49**

(45) Mention de la délivrance du brevet:
**09.05.84 Bulletin 84/19**

(84) Etats contractants désignés:
**DE FR GB IT**

(56) Documents cités:
**DE - A - 2 831 700**
**FR - A - 2 366 786**

(73) Titulaire: **JOHN DEERE (Société Anonyme), 8, Quai de la Madeleine, F-45000 Orléans (FR)**

(72) Inventeur: **Diot, Joel André, Les Crayes,**
**F-70100 Chargey-les-Gray (FR)**
Inventeur: **Viaud, Jean, Chargey-les-Gray, F-70100 Gray (FR)**

(74) Mandataire: **Pruvost, Marc Henri et al, Cabinet ORES 6, Avenue de Messine, F-75008 Paris (FR)**

## Description

La présente invention concerne les presses à balles cylindriques.

Ces presses sont d'un type général bien connu et comprennent des jeux de bandes ou courroies qui, par leur déplacement, forment par enroulement à l'intérieur d'une chambre ménagée dans le corps de la presse une balle de forme générale cylindrique à partir de produits de récolte, notamment de fourrage ou de foin, ramassés sur le champ au cours de la progression de la presse. Il est usuel, avant le déchargement de la balle cylindrique à partir de la presse, d'assurer son liage.

Cette opération, qui est réalisée à l'aide d'un lien constitué généralement par une ficelle, est effectuée de façon connue au moyen d'un organe de guidage de la ficelle déplacé transversalement au sens de marche de la presse devant l'orifice d'entrée des produits de récolte à l'intérieur de la chambre de formation de la balle. La ficelle est alors prélevée à une réserve telle qu'une boîte à ficelle prévue sur le châssis ou corps de la presse. Du fait du déplacement transversal de l'organe de guidage, cette ficelle forme autour de la balle, lorsqu'elle est appelée par la rotation de cette dernière, des spires hélicoïdales assurant un liage sur toute la longueur de cette balle.

Il est connu de réaliser l'organe de guidage de la ficelle sous la forme d'un bras, notamment d'un bras tubulaire, monté à pivotement sur la presse de manière à effectuer, sous l'action de moyens appropriés, un mouvement de balayage transversal en face de l'orifice d'entrée des produits de récolte dans la chambre de formation de la balle.

On a également déjà proposé de réaliser l'organe de guidage de la ficelle sous la forme d'un organe se déplaçant sur un guide rectiligne disposé devant cet orifice d'entrée des produits de récolte dans la chambre de formation de la balle. Des moyens sont alors prévus pour provoquer de façon positive le déplacement de cet organe de guidage le long de ce guide rectiligne (FR-A N° 2366786).

Ainsi, on a décrit, dans la demande de brevet allemand N° 2831700, un dispositif de liage pour presses à balles cylindriques comprenant une chaîne sans fin passant sur deux roues prévues vers les deux côtés de la presse et s'étendant parallèlement à l'orifice d'entrée des produits de récolte dans la presse, cette chaîne étant entraînée pendant l'opération de liage à partir d'une poulie sur laquelle la ficelle de liage passe ou s'enroule entre la boîte à ficelle et cet orifice d'entrée des produits de récolte. Il est prévu, autour des deux brins de la chaîne, un guide dans lequel peut coulisser un chariot de guidage qui est relié à la chaîne par un axe porté par un maillon de cette chaîne et s'engageant dans une fente de ce chariot. Ledit chariot porte lui-même des doigts de guidage de la ficelle qui, après son passage sur la poulie, rejoint un dispositif de départ occupant une position médiane. Au moment du liage, l'un des doigts du chariot saisit la ficelle lors de son passage et entraîne cette ficelle en un mouvement de va-et-vient complet sur la largeur de la presse, ladite ficelle étant ensuite sectionnée par un couteau à la fin de l'opération de liage.

Un dispositif de ce type est relativement complexe et peut être sujet à des dérangements, du fait en particulier du montage à coulissement du chariot dans le guide prévu pour sa réception, qui peut donner lieu à un coincement. En outre, l'agencement exige à chaque opération de liage un mouvement de va-et-vient complet du chariot du fait de la position médiane de la ficelle au début de l'opération.

Le but de l'invention est de créer un dispositif de liage de construction simple et d'un fonctionnement fiable, pouvant être en outre logé dans un carter assurant sa protection et dont l'agencement le soustrait aux dérangements pouvant résulter des conditions de travail rencontrées.

L'invention est matérialisée dans un dispositif de liage pour presses à balles cylindriques, comprenant au moins une chaîne ou analogue passant sur deux roues prévues chacune à proximité d'un côté différent de la presse et s'étendant parallèlement à l'orifice d'entrée des produits de récolte dans la presse, un élément de guidage de la ficelle déplacé par cette chaîne transversalement à la presse devant cet orifice d'entrée des produits de récolte, une poulie sur laquelle la ficelle passe ou s'enroule entre la boîte à ficelle et l'élément de guidage 17 de la ficelle avant d'atteindre cet orifice d'entrée des produits de récolte, de manière à faire tourner cette poulie lorsqu'une traction est exercée sur la ficelle par la balle au cours du liage, et des organes d'entraînement de la chaîne prévus entre cette poulie et cette chaîne, caractérisé en ce que cet élément de guidage de la ficelle est constitué par un doigt, un crochet, un anneau ou un élément équivalent porté directement par la chaîne ou analogue, en ce que les organes d'entraînement prévus entre la poulie et la chaîne sont agencés de manière à permettre, en dehors de la période de liage, le déplacement de la chaîne indépendamment de la poulie, et en ce qu'une liaison est prévue entre une des roues sur laquelle passe la chaîne et un élément de la presse déplacé au cours de la formation de la balle, pour amener cet élément de guidage de la ficelle en position de départ au voisinage de l'une des roues avant l'opération de liage de la balle.

Ainsi, il est possible de loger un dispositif de ce type dans un carter ou capot monté sur la presse en avant de l'orifice d'entrée des produits de récolte, en ménageant par exemple simplement dans ce carter ou capot un trou pour l'entrée de la ficelle et un passage en forme de fente pour sa sortie en direction de la balle, de sorte que le dispositif est protégé vis-à-vis des influences extérieures.

Suivant une particularité paraissant avantageuse, l'axe de la poulie sur laquelle passe ou s'enroule la ficelle est relié à un rochet ou élément équivalent dont le bec est en prise avec les maillons de la chaîne pour assurer son entraînement. Cet entraînement pas à pas fournit le lent mouvement de balayage transversal requis pour le liage, malgré une vitesse d'appel linéaire élevée de la ficelle compte tenu du diamètre important des balles cylindriques formées dans les presses de ce type. Ce rochet peut être monté excentriquement sur un disque porté par l'axe de la poulie, ce qui assure son entraînement par des moyens extrêmement simples.

Suivant une autre particularité de l'invention, les moyens prévus pour positionner l'élément de guidage vers un côté de la presse avant chaque opération de liage comprennent, sur l'axe de l'une des roues portant la chaîne ou analogue, un moyeu à effet unidirectionnel, et un élément souple tel qu'un câble, une corde ou analogue est enroulé sur ce moyeu et est relié à un élément de la presse déplacé au cours de la formation de la balle, tel que le rouleau supérieur de cette presse, ledit élément souple ou ce moyeu étant soumis en outre à l'action d'un organe de rappel élastique tel qu'un ressort. Ainsi, au cours de la formation de la balle dans la presse, le câble subit une traction en faisant tourner le moyeu sur lequel il est enroulé et la roue conjuguée, pour amener l'élément de guidage de la ficelle dans la position de départ voulue, en vue du liage. Pendant le liage, la roue tourne librement par rapport au moyeu et, lors de l'éjection de la balle, le retour du rouleau à sa position basse permet le rappel élastique du câble en vue de l'opération suivante.

Suivant une autre particularité encore, au moins un élément est prévu sur la chaîne pour commander l'ouverture du couteau destiné à sectionner la ficelle en fin d'opération de liage et à retenir son extrémité. Un autre élément tel qu'un galet peut également être prévu pour, au moment du déclenchement de l'opération de liage, ouvrir le couteau afin de libérer la ficelle, dont l'extrémité est alors reprise par les produits de récolte pénétrant dans la presse, la traction exercée commandant le mouvement de balayage transversal de l'élément de guidage de la ficelle comme indiqué.

L'invention concerne également les presses à balles cylindriques équipées d'un dispositif tel que décrit ci-avant.

La description qui va suivre, faite en regard des dessins annexés, donnés à titre non limitatif, permettra de mieux comprendre l'invention.

La fig. 1 est une vue en perspective d'une presse à balles cylindriques équipée du dispositif de liage suivant l'invention.

La fig. 2 ets une vue en perspective avec arrachement partiel du carter de dispositif, montrant l'agencement des éléments de ce dispositif dans ce carter.

La fig. 3 est une vue de profil d'une presse équipée du dispositif de liage.

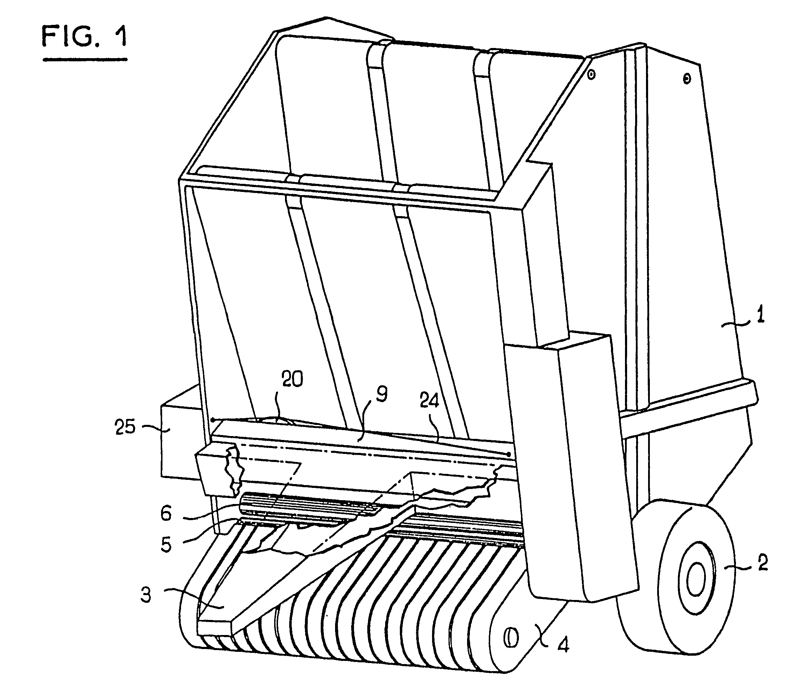

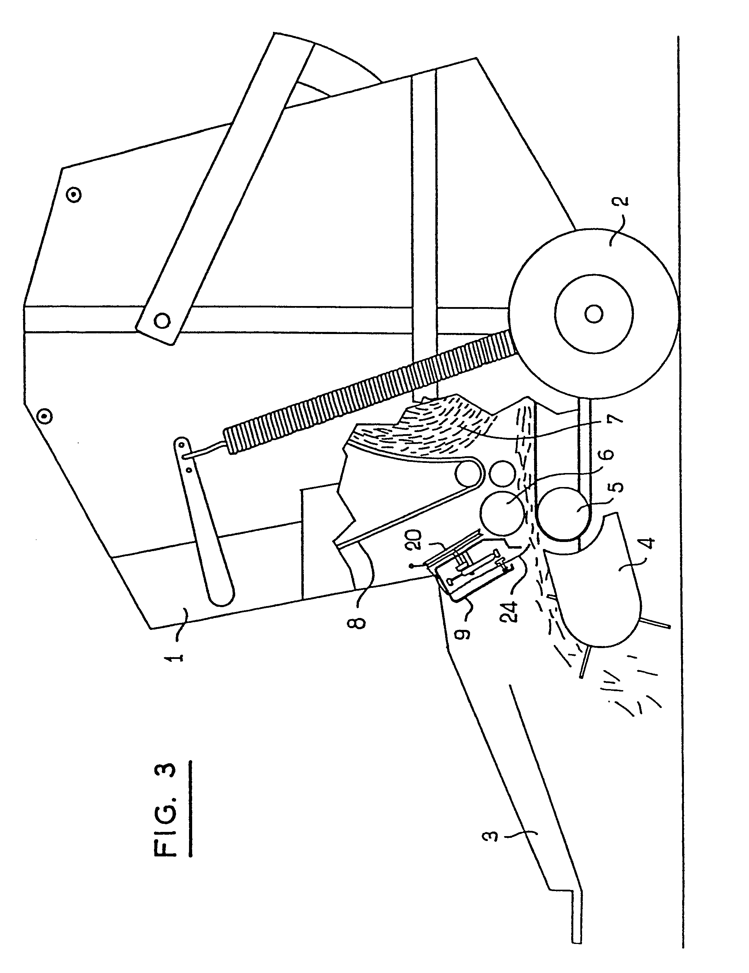

On a représenté sur les fig. 1 et 3 une presse à balles cylindriques de type classique, comportant un corps 1 supporté par un châssis équipé de roues 2, la presse étant destinée à être attelée à un tracteur au moyen d'un timon 3. Un ramasseur 4 est prévu de façon classique à la partie avant du corps de la presse, de manière à ramasser les produits de récolte, tels que du fourrage, sur le champ et à les amener à un orifice d'entrée ménagé entre des rouleaux 5, 6, comme cela est bien visible sur la fig. 3, en vue de la formation d'une balle comme montré en 7, par enroulement entre des bandes ou courroies 8 tournant dans le sens approprié, d'une manière en soi bien connue.

Suivant l'invention, un carter ou capot 9 est disposé transversalement à la presse en avant et au-dessus de l'orifice d'entrée des produits de récolte. Ce carter 9 est fixé de toute manière appropriée sur le corps de la presse et il est ouvert à sa partie inférieure pour une raison qui apparaîtra plus loin.

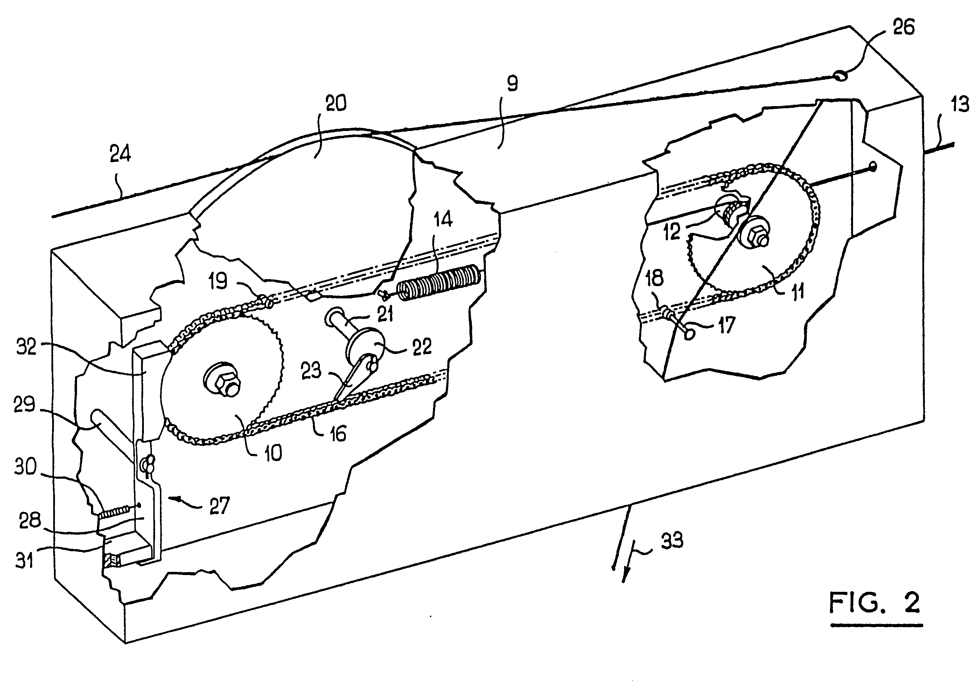

On décrira maintenant l'agencement du dispositif de liage faisant l'objet de l'invention qui est logé en majeure partie à l'intérieur du capot 9, de manière à être ainsi protégé vis-à-vis du milieu, en se reportant plus spécialement à la fig. 2.

Ce dispositif comprend des roues à chaîne 10, 11 qui sont supportées par la paroi arrière du carter 9. La roue à chaîne 10 peut tourner librement sur son axe, tandis que la roue à chaîne 11 est montée sur un moyeu 12 à effet unidirectionnel ou moyeu débrayable, dont le rôle sera indiqué plus loin. Un câble 13 s'enroule sur ce moyeu comme montré sur la fig. 2, sur lequel il est fixé par une extrémité. Le moyeu est en outre relié à un ressort 14 fixé en 15 par son autre extrémité sur le carter 9 et tendant à provoquer l'enroulement du câble 13 sur le moyeu 12.

L'autre extrémité du câble 13 est reliée d'une manière non représentée au bras portant le rouleau supérieur de la presse.

Une chaîne sans fin 16 passe sur les deux roues à chaîne 10, 11. Cette chaîne porte en un point de sa longueur un doigt 17 servant de guide-ficelle et conjugué à un galet 18 dont le rôle sera indiqué plus loin. Un autre galet 19 est fixé sur la chaîne en un point opposé par rapport au point de fixation du doigt 17 et du galet 18.

Une poulie de grand diamètre 20 est calée sur un axe 21 qui est tourillonné dans la paroi arrière du carter 9. Cet axe 21 porte à son extrémité avant un disque 22 qui supporte excentriquement un crochet ou linguet 23 dont le bec attaque les maillons de la chaîne 16.

La ficelle 24 servant au liage de la balle, qui est prélevée de la façon habituelle de la boîte à ficelle 25 portée par le corps de la machine (fig. 1), s'enroule comme montré autour de la poulie 20. Elle pénètre ensuite dans le carter 9 par un trou 26 et elle passe sur le doigt 17, par lequel elle est guidée, son extrémité étant soit reprise par la balle en cours de liage, soit retenue d'une façon en soi classique par un système de couteau indiqué en 27 sur la fig. 2 et qui sera décrit ci-après.

Ce système comprend un couteau à deux bras 28 monté de façon pivotante sur un axe 29 fixé dans le carter 9 et appliqué normalement par un ressort 30 contre une enclume 31. Dans cette position d'application, le talon 32 du couteau est immédiatement voisin de la chaîne 16 passant sur la poulie 10.

Le fonctionnement du dispositif est le suivant: lorsque le dispositif est en condition de repos, le doigt 17 et le galet 18 portés par la chaîne se trouvent sur la roue à chaîne 10 et ont juste franchi le talon 32 du couteau 28 au cours du déplacement de la chaîne 16 dans le sens horaire quand on regarde la fig. 2. Le galet 19 se trouve sensiblement au droit de la roue à chaîne 11. La ficelle, qui a été sectionnée par le couteau 28, est retenue par celui-ci contre l'enclume 31. Le ressort 14 est détendu et le câble 13 est enroulé sur le moyeu 12 du fait que le bras portant le rouleau supérieur de la chambre de formation de la balle de la presse se trouve en position basse.

Pendant la formation de la balle, ce rouleau supérieur se déplace progressivement vers le haut au fur et à mesure de l'augmentation de diamètre de cette balle. Une traction est ainsi exercée sur le câble 13, qui entraîne en rotation dans le sens horaire le moyeu 12 sur lequel il est enroulé. Dans ce sens, le moyeu 12 entraîne également la roue à chaîne 11 et la chaîne 16 se déplace ainsi dans le sens horaire. Le galet 19 se dirige alors vers la roue à chaîne 10 dans le brin inférieur de la chaîne, tandis que le doigt 17 et le galet 18 se dirigent vers la roue à chaîne 11 dans son brin supérieur. Compte tenu de la position relative du rochet 23, les maillons de la chaîne 16 passent librement en face de son bec. En outre, la longueur de ficelle entre le trou 26 et le couteau 28 reste sensiblement constante et la poulie 20 ne tourne pas.

Vers la fin de l'opération de formation de la balle, le galet 19 atteint la poulie 20 et passe autour d'elle. Ce faisant, il agit sur le talon 32 du couteau 28 pour ouvrir celui-ci en antagonisme à la résistance du ressort 30, ce qui libère la partie terminale de la ficelle 24. L'extrémité de celle-ci tombe alors vers les produits de récolte, par lesquels elle est saisie pour être entraînée par traction par la balle lors de sa rotation dans la chambre de la presse, dans le sens indiqué par la flèche 33 sur la fig. 2.

Du fait de cet appel de la ficelle, la poulie 20 sur laquelle cette ficelle s'enroule entre la boîte à ficelle et la balle est entraînée en rotation dans le sens horaire, ce qui fait tourner l'axe 21 et le disque 22, de sorte que le rochet excentré 23 agit par son bec sur les maillons de la chaîne 16 pour la faire avancer pas à pas également dans le sens horaire. La rotation de la roue à chaîne 11 dans ce sens est permise par le moyeu débrayable 12, tandis que le câble 13 reste immobile puisque le bras du rouleau supérieur se trouve toujours en position haute. Dans cette condition, le ressort 14 est bandé.

Au cours de ce stade, le doigt 17 se déplace ainsi progressivement de la roue à chaîne 11 vers la roue à chaîne 10, ce qui déplace également dans le sens transversal le point de pénétration de la ficelle dans l'orifice d'entrée des produits de récolte. Ainsi, la ficelle est enroulée autour de la balle selon un trajet hélicoïdal, de la manière en soi requise pour un liage correct.

Quand le doigt 17 atteint la poulie 10, le galet 18, en passant devant le talon 32, provoque l'ouverture du couteau 28. Par sa position, la ficelle 24 parvient alors entre le couteau 28 et l'enclume 31. Dès que le galet 18, en passant autour de la poulie 10, libère le talon 32, le couteau 28 se referme sous l'action du ressort 30, en sectionnant la ficelle et en retenant son extrémité contre l'enclume 31.

Le liage de la balle est alors terminé et cette balle peut être éjectée hors de la presse. Au moment de cette éjection, le bras portant le rouleau supérieur de la presse redescend, ce qui supprime la traction exercée sur le câble 13. Sous l'effet du ressort 14, ce câble est alors rappelé en arrière, le moyeu débrayable 12 tournant dans le sens antihoraire. Le dispositif est alors ramené dans sa condition de repos indiquée précédemment et un nouveau cycle peut commencer.

Des modifications peuvent être apportées au mode de réalisation décrit, dans le domaine des équivalences techniques, sans s'écarter de l'invention.

## Revendications

1. Dispositif de liage pour presses à balles cylindriques comprenant au moins une chaîne (16) ou analogue passant sur deux roues (10, 11) prévues chacune à proximité d'un côté différent de la presse et s'étendant parallèlement à l'orifice d'entrée des produits de récolte dans la presse, un élément (17) de guidage de la ficelle (24) déplacé par cette chaîne (16) transversalement à la presse devant cet orifice d'entrée des produits de récolte, une poulie (20) sur laquelle la ficelle (24) passe ou s'enroule entre la boîte à ficelle et l'élément de guidage (17) de la ficelle avant d'atteindre cet orifice d'entrée des produits de récolte, de manière à faire tourner cette poulie lorsqu'une traction est exercée sur la ficelle par la balle au cours du liage, et des organes d'entraînement (20, 22, 23) de la chaîne prévus entre cette poulie et cette chaîne, caractérisé en ce que cet élément de guidage de la ficelle (24) est constitué par un doigt (17), un crochet, un anneau ou un élément équivalent porté directement par la chaîne (16) ou analogue, en ce que les organes d'entraînement (21, 22, 23) prévus entre la poulie (20) et la chaîne (16) sont agencés de manière à permettre, en dehors de la période de liage, le déplacement de la chaîne (16) indépendamment de la poulie (20), et en ce qu'une liaison (12, 13) est prévue entre une (11) des roues sur laquelle passe la chaîne (16) et un élément de la presse déplacé au cours de la formation de la balle, pour amener cet élément (17) de guidage de la ficelle en position de départ au voisinage de l'une des roues (10, 11) avant l'opération de liage de la balle.

2. Dispositif de liage suivant la revendication 1, caractérisé en ce qu'au moins la chaîne (16) ou analogue et les roues (10, 11) sur lesquelles elle passe sont montées dans un carter ou capot (9) disposé transversalement à la presse en avant de l'orifice d'entrée des produits de récolte.

3. Dispositif de liage suivant l'une des revendications 1 ou 2, caractérisé en ce que l'axe (21) de la poulie (20) sur laquelle passe ou s'enroule la ficelle (24) est relié à un rochet (23) dont le bec est en prise avec les maillons de la chaîne (16) ou analogue pour assurer son entraînement.

4. Dispositif de liage suivant la revendication 3, caractérisé en ce que ce rochet (23) est monté de façon excentrée sur un disque (22) porté par l'axe (21) de la poulie (20).

5. Dispositif de liage suivant l'une des revendications précédentes, caractérisé en ce qu'il est prévu, sur l'axe de l'une des roues (11) portant la chaîne (16) ou analogue, un moyeu (12) à effet unidirectionnel et un élément souple tel qu'un câble (13), une corde ou analogue enroulé sur ce moyeu (12) et relié à un élément de la presse déplacé au cours de la formation de la balle tel que le rouleau supérieur de cette presse, ce moyeu étant soumis en outre à l'action d'un organe de rappel élastique (14).

6. Dispositif de liage suivant l'une des revendications précédentes, caractérisé en ce qu'au moins un élément (18) est prévu sur la chaîne (16) ou analogue pour commander le couteau (28) destiné à sectionner la ficelle (24) en fin d'opération de liage.

7. Dispositif de liage suivant la revendication 6, caractérisé en ce qu'au moins un autre élément (19) est prévu sur la chaîne (16) ou analogue pour actionner le couteau (28) retenant la ficelle (24) au début de l'opération de liage, afin de libérer cette ficelle.

8. Presses à balles cylindriques, caractérisée en ce qu'elles comportent un dispositif de liage suivant l'une des revendications précédentes.

**Patentansprüche**

1. Bindevorrichtung für Pressen von zylindrischen Ballen, welche wenigstens eine Kette (16) oder ein analoges Element umfasst, welche über zwei Rollen (10, 11) läuft, die jede nahe verschiedener Seiten der Presse vorgesehen sind, und sich parallel zur Eintrittsöffnung der Ernteprodukte in die Presse erstreckt, wobei ein Führungselement (17) für das Garn (24) durch diese Kette (16) quer zur Presse und vor dieser Eintrittsöffnung für die Ernteprodukte verschoben wird, eine Scheibe (20) vorgesehen ist, über die das Garn (24) zwischen dem Garnkasten und dem Führungselement (17) für das Garn läuft oder sich abrollt, bevor dieses die Eintrittsöffnung der Ernteprodukte erreicht, derart, dass die Scheibe gedreht wird, wenn durch den Ballen im Laufe des Bindevorganges ein Zug auf das Garn ausgeübt wird, sowie Antriebsorganen (20, 22, 23) für die Kette, welche zwischen der Scheibe und der Kette vorgesehen sind, dadurch gekennzeichnet, dass das Führungselement für das Garn (24) durch einen Finger (17), einen Haken, einen Ring oder ein äquivalentes Element gebildet wird, das direkt durch die Kette (16) oder ein analoges Element getragen wird, dass die Antriebsorgane (21, 22, 23), die zwischen der Scheibe (20) und der Kette (16) vorgesehen sind, derart angeordnet sind, dass sie ausserhalb der Bindeperiode ein Verstellen der Kette (16) unabhängig von der Scheibe (20) ermöglichen, und dass eine Verbindung (12, 13) zwischen einem (11) der Räder, über das die Kette (16) läuft, und einem Element der Presse vorgesehen ist, welches im Verlauf der Bildung des Ballens verstellt wird, um das Führungselement (17) des Garnes in eine Ausgangsposition in der Nähe eines der Räder (10, 11) vor dem Bindevorgang des Ballens zu bringen.

2. Bindevorrichtung nach Anspruch 1, dadurch gekennzeichnet, dass wenigstens die Kette (16) oder das analoge Element und die Räder (10, 11), auf denen diese läuft, in einem Gehäuse oder einer Haube (9) montiert sind, die quer zur Presse und vor der Eintrittsöffnung für die Ernteprodukte angeordnet ist.

3. Bindevorrichtung nach einem der beiden Ansprüche 1 oder 2, dadurch gekennzeichnet, dass die Achse (21) der Scheibe (20), über die das Garn (24) läuft oder sich abrollt, mit einer Klinke (23) verbunden ist, deren Schnabel mit den Gliedern der Kette (16) oder dem analogen Element in Eingriff steht, um seine Mitnahme sicherzustellen.

4. Bindevorrichtung nach Anspruch 3, dadurch gekennzeichnet, dass die Klinke (23) exzentrisch auf einer Scheibe (22) angeordnet ist, die durch die Achse (21) der Riemenscheibe (20) getragen ist.

5. Bindevorrichtung nach irgendeinem der voranstehenden Ansprüche, dadurch gekennzeichnet, dass auf die Achse eines der Räder (11), welche die Kette (16) oder das analoge Element tragen, eine Nabe (12) mit nur einer wirksamen Drehrichtung vorgesehen ist, und ein biegsames Element, wie ein Kabel (13), eine Schnur od. dgl., auf der Nabe (12) aufgerollt und mit einem Element der Presse verbunden ist, das im Verlaufe der Bildung eines Ballens verstellt wird, wie die obere Rolle der Presse, wobei die Nabe unter anderem unter der Wirkung eines elastischen Rückholorgans (14) steht.

6. Bindevorrichtung nach irgendeinem der voranstehenden Ansprüche, dadurch gekennzeichnet, dass wenigstens ein Element (18) auf der Kette (16) oder dem analogen Element vorgesehen ist, um das Messer (28) zu steuern, das zum Durchtrennen des Garnes (24) am Ende des Bindevorganges bestimmt ist.

7. Bindevorrichtung nach Anspruch 6, dadurch gekennzeichnet, dass wenigstens ein anderes Element (19) auf der Kette (16) oder dem analogen Element vorgesehen ist, um das Messer (28) zu betätigen, welches das Garn freigibt.

8. Presse für zylindrische Ballen, dadurch gekennzeichnet, dass sie eine Bindevorrichtung nach irgendeinem der voranstehenden Ansprüche umfasst.

**Claims**

1. A binding apparatus for cylindrical bale presses comprising at least one chain (16) or the like which passes over two wheels (10, 11) each provided in the vicinity of a different side of the press and which extends parallel to the aperture for the intake of the crop products into the press, an element (17) for guiding the yarn (24), which element is displaced by said chain (16) transversely with respect to the press in front of said crop product intake aperture, a pulley (20) around which the yarn (24) passes or is wound between the yarn box and the yarn guide element (17) before reaching said crop product intake aperture, so as to cause said pulley to rotate when a pulling force is applied to the yarn by the bale in the course of the binding operation, and members (20, 22, 23) for driving the chain, disposed between said pulley and said chain, characterised in that said element for guiding the yarn (24) comprises a finger (17), a hook member, a ring or an equivalent element, which is directly carried by the chain (16) or the like, that the drive members (21, 22, 23) provided between the pulley (20) and the chain (16) are so arranged as to permit displacement of the chain (16) independently of the pulley (20), outside of the binding period, and that a connecting means (12, 13) is provided between one (11) of the wheels, around which the chain (16) passes, and an element of the press which is displaced in the course of formation of the bale, to move said yarn guide element (17) into a starting position in the vicinity of one of the wheels (10, 11) before the bale binding operation.

2. A binding apparatus according to claim 1, characterised in that at least the chain (16) or the like and the wheels (10, 11) around which the chain passes are mounted in a casing or cover (9) which is disposed transversely with respect to the press in front of the crop product intake aperture.

3. A binding apparatus according to Claim 1 or 2, characterised in that the spindle (21) of the pulley (20) around which the yarn (24) passes or is wound is connected to a ratchet member (23), the tip of which is engaged with the links of the chain (16) or the like to provide for entrainment thereof.

4. A binding apparatus according to claim 3, characterised in that said ratchet member (23) is mounted eccentrically on a disc (22) carried by the spindle (21) of the pulley (20).

5. A binding apparatus according to any one of the preceding claims, characterised in that provided on the spindle of one of the wheels (11) carrying the chain (16) or the like is a unidirectional-action hub (12) and a flexible element such as a cable (13), a cord or the like which is wound around said hub (12) and connected to an element of the press which is displaced in the course of formation of the bale such as the upper roller of said press, said hub also being subjected to the action of a resilient return member (14).

6. A binding apparatus according to any one of the preceding claims, characterised in that at least one element (18) is provided on the chain (16) or the like to control the knife (28) for cutting the yarn (24) at the end of a binding operation.

7. A binding apparatus according to claim 6, characterised in that at least one other element (19) is provided on the chain (16) or the like for actuating the knife (28) which retains the yarn (24) at the beginning of the binding operation, in order to free said yarn.

8. Cylindrical bale presses characterised in that they comprise a binding apparatus according to any one of the preceding claims.

FIG. 1

0 041 443

FIG. 2

0 041 443

FIG. 3